# EUROPEAN PATENT APPLICATION

(11) **EP 4 818 268 A1**
(43) Date of publication of application: **07.10.2026**
(21) Application number: 24913247.3
(22) Date of filing: 14.11.2024
(51) Int. Cl.: C09C 1/56, C09C 1/50, C09C 3/04

(54) **HIGHLY CONDUCTIVE CARBON BLACK POWDER AND MANUFACTURING METHOD THEREOF**

(30) Priority: 26.12.2023 KR 20230191627
(71) Applicant: OCI Company Ltd., Seoul 04532 (KR)
(72) Inventor: PARK, Jaeheung, Seongnam-si Gyeonggi-do 13212 (KR); MOK, Jihye, Seongnam-si Gyeonggi-do 13212 (KR); CHO, Suntae, Seongnam-si Gyeonggi-do 13212 (KR); JEON, Yongjin, Seongnam-si Gyeonggi-do 13212 (KR)
(74) Representative: Winter, Brandl - Partnerschaft mbB
(86) International application number: PCT/KR2024/017949
(87) International publication number: WO 2025/143536

(57) **Abstract**

Disclosed are a highly conductive carbon black powder having excellent processability and dispersibility and clearly reducing grit, which is an impurity, and a manufacturing method thereof. To this end, the highly conductive carbon black powder and the manufacturing method thereof according to the present invention introduce a feedstock two-stage spray method to produce carbon black so as to have a wide aggregate size distribution (ASD), thereby improving dispersibility and processability without deteriorating the conductivity of the carbon black powder.

## Description

### [Technical Field]

The present invention relates to a highly conductive carbon black powder and a manufacturing method thereof, and more particularly, to a highly conductive carbon black powder having excellent processability and dispersibility and clearly reducing grit, which is an impurity, and a manufacturing method thereof.

### [Background Art]

Carbon black refers to an aggregate of very fine spherical particles obtained by incompletely combusting hydrocarbons or compounds containing carbon. Carbon black is obtained by forming primary particles in a reactor and fusing the primary particles with each other to form grape cluster-shaped aggregates. Meanwhile, carbon black may be broadly classified into acetylene black and furnace black. Among these, furnace black has an advantage in that the cost is low, but has a disadvantage in that it is difficult to achieve high crystallinity compared to acetylene black.

Carbon black affects the quality of materials in which it is used depending on its own properties, including crystallinity, specific surface area, structure, particle size, and the like, which may be adjusted through various post-treatments. Carbon black is used in various fields such as industrial additives, industrial paints, coating compositions, and various printed materials.

Carbon black having excellent electrical conductivity is widely used in wires and electro-static discharge (ESD) materials, and in particular, serves as a key conductive filler in the semiconductive portion of wires.

In the case of wires, surface smoothness during extrusion is very important. When the surface is not flat due to surface protrusions, electrical treeing of the wire may be induced, thereby causing a problem in that the wire is broken or its lifespan is shortened.

In the case of conventional carbon black having excellent electrical conductivity, it is mostly manufactured by increasing an oil absorption number (OAN). In such a case, however, dispersibility and processability are poor, thereby causing a problem in that protrusion formation on a wire surface may be induced. In addition, when grit, which is an impurity of carbon black, is present on a compound surface, surface protrusions may be generated.

### [Disclosure]

### [Technical Problem]

In view of the above-described technical problems, an object of the present invention is to provide a highly conductive carbon black powder having excellent processability and dispersibility and clearly reducing grit, which is an impurity, and a manufacturing method thereof.

### [Technical Solution]

According to an embodiment of the present invention for achieving the above object, a method for manufacturing a highly conductive carbon black powder comprises: (a) preparing carbon black in a reactor and then filtering the carbon black by passing the carbon black through a main bag filter; (b) transferring the filtered carbon black to a grit trap system to primarily remove impurities of carbon black having a relatively large particle size; (c) transferring the carbon black from which impurities have been primarily removed to a low grit system to secondarily remove impurities of carbon black having a relatively small particle size; (d) transferring the carbon black from which impurities have been secondarily removed to a pulverizer to pulverize the carbon black; and (e) pelletizing the pulverized product, followed by drying to obtain a highly conductive carbon black powder.

In (a) above, the carbon black is prepared at a temperature of 1,300 to 1,800°C.

In (a) above, the reactor comprises: at least one supply part having an air supply part and a fuel supply part; a reaction part into which a high-temperature combustion gas introduced through the supply part flows; a throat extending from the reaction part and formed to have a diameter decreasing from the reaction part; and a quenching part extending from the throat and having a larger diameter compared to the throat.

The throat and the quenching part are designed to satisfy Equation 1 below:
Equation 1: $0.36 \leq \left(diameter of throat/diameter of quenching part\right) \leq 0.44$

The grit trap system is installed to communicate with the throat of the reactor.

The grit trap system is designed such that a pipe through which the carbon black flows is vertically installed, and air is injected into an interior of the pipe to form a vortex, thereby increasing a residence time of the carbon black transferred into the pipe.

Feedstock is supplied by a two-stage feedstock injection method in which the feedstock is injected at two locations communicating with the throat of the reactor and having different positions in the throat of the reactor.

In the two-stage feedstock injection method, the feedstock is primarily supplied at a rate of 300 to 600 kg/hour using a feedstock nozzle, and is secondarily supplied at a rate of 1,000 to 2,000 kg/hour using a feedstock nozzle.

During the primary supply using the feedstock nozzle, 20 to 25 wt% based on a total of 100 wt% is supplied, and during the second supply using the feedstock nozzle, 75 to 80 wt% based on the total of 100 wt% is supplied.

In the two-stage feedstock injection, the feedstock is simultaneously injected at two locations communicating with the throat of the reactor and having different positions in the throat of the reactor.

In the grit trap system, grit having an average diameter exceeding 150 µm is removed.

In (d) above, the pulverizing is performed using any one selected from a hammer mill, a high-speed mixer, a ball mill, and an air jet mill.

According to an embodiment of the present invention for achieving the above object, a highly conductive carbon black powder is a carbon black powder manufactured by the method for manufacturing a highly conductive carbon black powder, wherein the carbon black powder contains 10 ppm or less of grit having an average diameter of 50 to 150 µm.

### [Advantageous Effects]

In the highly conductive carbon black powder and the manufacturing method thereof according to the present invention, carbon black is produced by changing a diameter of a throat of a reactor to adjust a ratio with a diameter of a quenching part, and reflecting operating conditions suitable therefor.

In particular, in the highly conductive carbon black powder and the manufacturing method thereof according to the present invention, a two-stage feedstock injection method is introduced to produce carbon black having a wide aggregate size distribution (ASD), thereby improving dispersibility and processability without deteriorating the conductivity of the carbon black powder.

To this end, in the highly conductive carbon black powder and the manufacturing method thereof according to the present invention, a grit trap system is designed such that a pipe through which carbon black flows is vertically installed, and air is injected into an interior of the pipe to form a vortex, thereby increasing a residence time of the carbon black transferred into the pipe. Accordingly, relatively heavy grit impurities fall in a gravity direction as a residence time is increased by the vortex, whereby relatively large-sized grit is removed in advance before carbon black is introduced into a low grit system, thereby enabling a carbon black powder having an overall reduced grit to be manufactured.

As a result, the highly conductive carbon black powder manufactured by the method according to the present invention can have excellent processability and dispersibility together with excellent electrical conductivity, while remarkably reducing grit, which is a cause of surface protrusions.

Therefore, the highly conductive carbon black powder manufactured by the method according to the present invention is suitable for use in a high-voltage wire semiconductive masterbatch and an electro-static discharge (ESD) material.

In addition to the above-described effects, the specific effects of the present invention will be described together with the specific matters for implementing the invention below.

### [Brief Description of the Drawings]

FIG. 1 is a process flowchart illustrating a method for manufacturing a highly conductive carbon black powder according to an embodiment of the present invention.
FIG. 2 is a process schematic diagram for explaining a method for manufacturing a highly conductive carbon black powder according to an embodiment of the present invention.
FIG. 3 is a cross-sectional view specifically illustrating a reactor according to an example of the present invention.
FIG. 4 is a schematic diagram for explaining a connection structure of a reactor and a grit trap system according to an example of the present invention.
FIG. 5 is a computational simulation image of a grit trap system according to an embodiment of the present invention.
FIG. 6 is a graph showing results of an aggregate size distribution (ASD) analysis of carbon black powders manufactured according to Example 1 and Comparative Examples 1 and 2.
FIG. 7 is an image observing cross-sections of carbon black compounds manufactured according to Example 1 and Comparative Examples 1 and 2.
FIG. 8 is an image observing surfaces of carbon black compounds manufactured according to Example 1 and Comparative Examples 1 and 2.

### [Best Modes of the Invention]

The above-described objects, features, and advantages will be described in detail below with reference to the attached drawings, and thus those skilled in the art may easily implement the technical idea of the present invention. In describing the present invention, if it is determined that detailed descriptions of the known technology related to the present invention may unnecessarily obscure the gist of the present invention, the detailed description thereof will be omitted. Hereinafter, preferred embodiments according to the present invention will be described in detail with reference to the accompanying drawings. In the drawings, the same reference numerals are used to indicate the same or similar components.

In the present specification, descriptions that are not set forth herein but can be sufficiently and technically inferred by a person skilled in the art to which the present invention pertains will be omitted.

In the present specification, when any component is disposed "on (or under)" a component or "above (or below)" a component, this may mean not only that any component is disposed in contact with the upper surface (or lower surface) of said component, but also that other components may be interposed between said component and any component disposed on (or under) said component.

As used herein, singular expressions include plural expressions unless the context clearly implies otherwise. As used herein, terms such as "include", "have", or "comprise" should not be construed to necessarily include all of the various components described in the specification, and should be construed to mean that some of the components may not be included, or that additional components may be further included.

Hereinafter, a highly conductive carbon black powder and a manufacturing method thereof according to a preferred embodiment of the present invention will be described in detail with reference to the accompanying drawings.

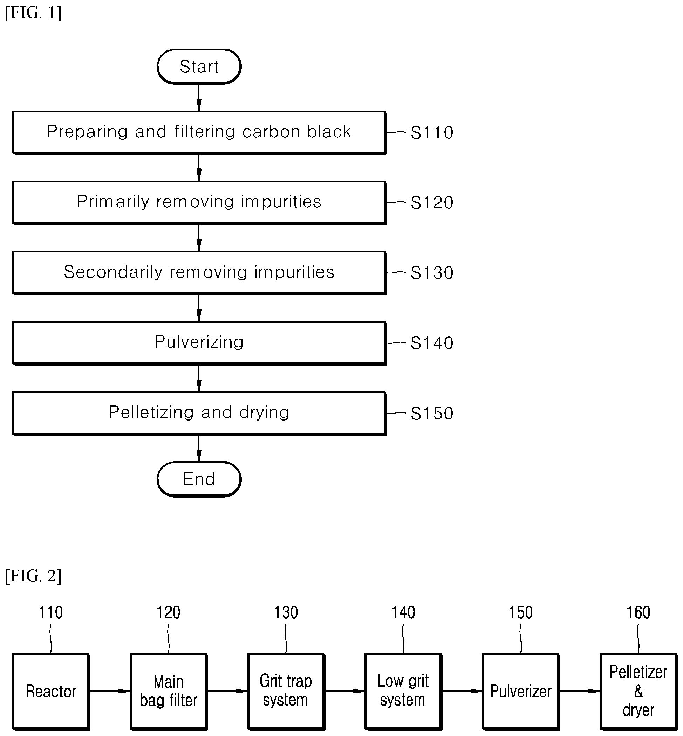

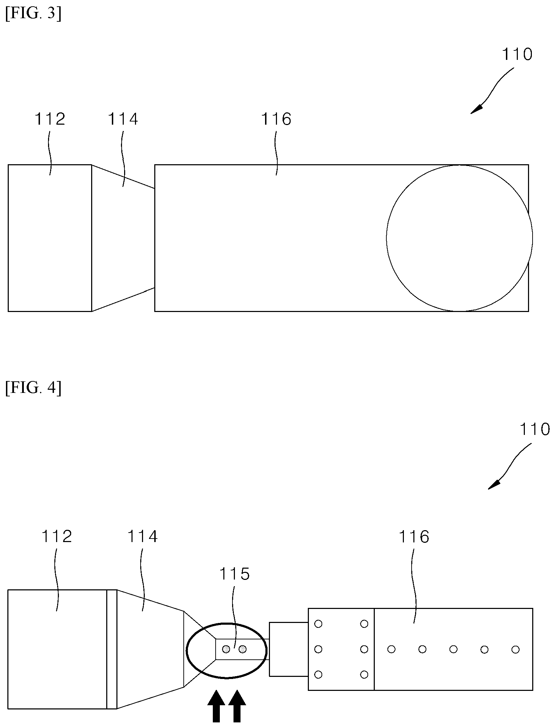

FIG. 1 is a process flowchart illustrating a method for manufacturing a highly conductive carbon black powder according to an embodiment of the present invention, and FIG. 2 is a process schematic diagram for explaining a method for manufacturing a highly conductive carbon black powder according to an embodiment of the present invention. In addition, FIG. 3 is a cross-sectional view specifically illustrating a reactor according to an example of the present invention, and FIG. 4 is a schematic diagram for explaining a connection structure of a reactor and a grit trap system according to an example of the present invention.

Referring to FIGS. 1 and 2, the method for manufacturing a highly conductive carbon black powder according to an embodiment of the present invention includes: a carbon black preparing and filtering step (S110), a primary impurity removal step (S120), a secondary impurity removal step (S130), a pulverizing step (S140), and a pelletizing and drying step (S150).

### Preparing and Filtering Carbon Black

In the step of preparing and filtering carbon black (S110), granulated carbon black is prepared in a reactor (110) and then filtered by passing it through a main bag filter 120.

In this step, the carbon black is preferably prepared at a temperature of 1,300 to 1,800°C.

As shown in FIG. 3, the reactor 110 may include: at least one supply part 112 having an air supply part and a fuel supply part, a reaction part 114 into which high-temperature combustion gas introduced through the supply part 112 flows, a throat 115 extending from the reaction part 114 and formed to have a diameter decreasing from the reaction part 114, and a quenching part 116 extending from the throat 115 and having a larger diameter compared to the throat 115.

In particular, in the present invention, it is preferable that the throat 115 and the quenching part 116 are designed to satisfy Equation 1 below: Equation 1: $0.36 \leq \left(diameter of throat/diameter of quenching part\right) \leq 0.44$

As described above, when the ratio of (diameter of throat / diameter of quenching part) does not satisfy 0.36 to 0.44, it becomes difficult to produce carbon black having a wide aggregate size distribution (ASD), which may result in deterioration of dispersibility and processability.

### Primary Impurity Removal

In the primary impurity removal step (S120), the filtered carbon black is transferred to a grit trap system 130 to primarily remove impurities of carbon black having a relatively large particle size.

Here, as shown in FIG. 4, the grit trap system 130 may be installed to communicate with the throat 115 of the reactor 110.

In this case, the grit trap system 130 is designed such that a pipe through which the carbon black flows is vertically installed, and air is injected into an interior of the pipe to form a vortex, thereby increasing a residence time of the carbon black transferred into the pipe.

In this step, feedstock may be supplied by a two-stage feedstock injection method in which feedstock is injected at two locations having different positions in the throat 115 of the reactor 110. In this case, the two-stage feedstock injection method may inject feedstock sequentially at two locations having different positions in the throat 115 of the reactor 110.

In this case, in the two-stage feedstock injection method, it is preferable that the feedstock is primarily supplied at a rate of 300 to 600 kg/hour using a feedstock nozzle, and is secondarily supplied at a rate of 1,000 to 2,000 kg/hour using a feedstock nozzle.

More specifically, during the primary supply using the feedstock nozzle, 20 to 25 wt% based on a total of 100 wt% is supplied, and during the second supply using the feedstock nozzle, 75 to 80 wt% based on the total of 100 wt% is supplied.

In addition, in the two-stage feedstock injection, the feedstock may be injected simultaneously at two locations having different positions in the throat 115 of the reactor 110.

To this end, for the two-stage feedstock injection, a feedstock nozzle is mounted to be inserted into a portion indicated by a circle in the throat 115 of the reactor 110. Accordingly, the two-stage feedstock injection is a method for producing a wide aggregate size distribution (ASD) and is performed in the throat 115 of the reactor 110.

In addition, the two-stage feedstock injection is a concept of simultaneously injecting feedstock at two locations having different positions in the throat 115 of the reactor, and may be performed for a purpose of producing carbon black having a wide ASD to improve processability.

Subsequently, the grit trap system 130 is a primary impurity removal process for removing relatively large grit first. Accordingly, in the grit trap system 130, grit having an average diameter exceeding 150 µm is removed.

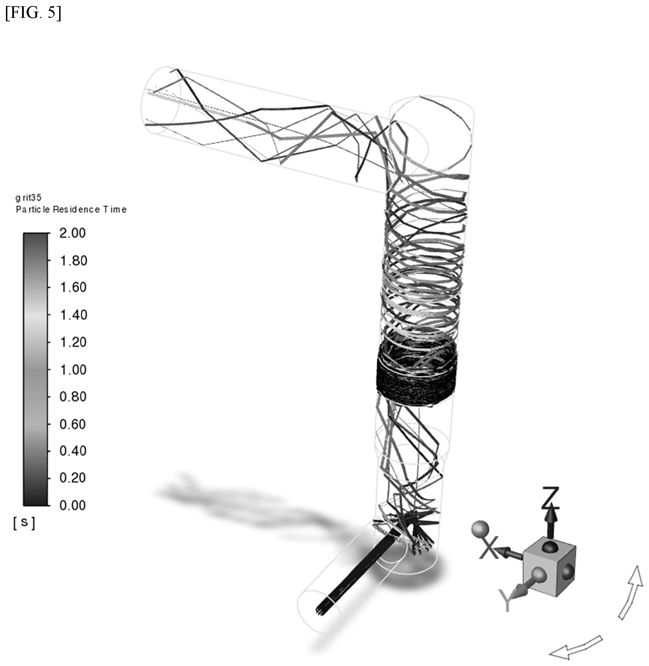

Table 1 shows results calculated through a computational simulation of the grit trap system, and FIG. 5 is a computational simulation image of the grit trap system.

**[Table 1]**

| Division | Grit Size | Density | Number of Rotations | Trap Ratio | Grit Residual Amount | |
|---|---|---|---|---|---|---|
| | (*µ*m) | (kg/cm³) | (times) | | kg/h | ppm |
| Grit (325mesh) | 50 | 1,500 | 4~5 | 30% | 2.184 | 1,050 |
| Grit (100mesh) | 150 | 1,500 | 5~ | 50% | 0.52 | 250 |
| Grit (35mesh) | 500 | 1,500 | 5~ | 100% | 0 | 0 |

As shown in Table 1 and FIG. 5, as a result of the computational simulation of the grit trap system 130, it can be confirmed that, in the case of Grit 35 mesh, a grit trap ratio of 100% is achieved and no grit residual amount is present.

As described above, it has been found that it is preferable to design the grit trap system 130 such that a pipe through which the carbon black flows is vertically installed, and air is injected into an interior of the pipe to form a vortex, thereby increasing a residence time of the carbon black transferred into the pipe. In such a design, relatively heavy grit impurities fall in a gravity direction as a residence time is increased by the vortex, whereby relatively large-sized grit is removed in advance before carbon black is introduced into a low grit system 140, thereby reducing grit overall.

### Secondary Impurity Removal

In the secondary impurity removal step (S130), carbon black from which impurities have been primarily removed is transferred to a low grit system 140 to secondarily remove impurities of carbon black having a relatively small particle size.

As such, conventionally, only the low grit system 140 (eACM) has been used, but in the present invention, a grit trap system 130 is additionally mounted at a front end of the low grit system 140.

Accordingly, in the present invention, impurities of carbon black having a relatively large particle size are primarily removed by passing through the grit trap system 130, and then impurities of carbon black having a relatively small particle size are secondarily removed by passing through the low grit system 140 mounted at a rear end of the grit trap system 130, thereby further reducing grit.

### Pulverizing

In the pulverizing step (S140), carbon black from which impurities have been secondarily removed is transferred to a pulverizer 150 to be pulverized.

In this step, the pulverizing may be performed using any one selected from a hammer mill, a high-speed mixer, a ball mill, and an air jet mill, and among these, it is preferable to perform the pulverizing using a high-speed rotating hammer mill. Through the pulverizing step (S140), the carbon black may be pulverized into fine powder having an average diameter of 500 µm or less.

### Pelletizing and Drying

In the pelletizing and drying step (S150), the pulverized product is pelletized, followed by drying to obtain a highly conductive carbon black powder.

To this end, a pelletizer and a dryer 160 may be sequentially installed at a rear end of the pulverizer 150.

During the pelletizing, in order to facilitate transfer and handling of carbon black, which is the pulverized product in a fine powder state, it is preferable to add a binder, an emulsion solution, and a solvent together to the pulverized product. As described above, during the pelletizing, a binder, an emulsion solution, and a solvent are added together to the pulverized product, and the pulverized product is granulated into particles having a size of 1 to 2 mm through a rotational centrifugal action to be pelletized.

Thereafter, moisture is evaporated using a heat source and an air flow, and particles of the pulverized product are dried to obtain carbon black particles. During the drying, it is preferable to perform residence drying at 150 to 250°C for 1 to 2 hours in order to remove moisture (50% → less than 0.5%) in the pulverized product. In addition, it is preferable to use a dryer in the form of a rotating cylinder, and a desired moisture content may be obtained by adjusting temperature and time accurately during the drying process.

The carbon black powder obtained after completing the pelletizing and drying step (S150) may be packaged as a final product through a packaging process after exiting the dryer.

Thereby, the method for manufacturing a highly conductive carbon black powder according to an embodiment of the present invention may be terminated.

In the highly conductive carbon black powder and the manufacturing method thereof according to the above-described embodiment of the present invention, carbon black is produced by changing a diameter of a throat of a reactor to adjust a ratio with a diameter of a quenching part, and reflecting operating conditions suitable therefor.

In particular, in the highly conductive carbon black powder and the manufacturing method thereof according to the embodiment of the present invention, a two-stage feedstock injection method is introduced to produce carbon black having a wide aggregate size distribution (ASD), thereby improving dispersibility and processability without deteriorating the conductivity of the carbon black powder.

Conventionally, only a low grit system (eACM) has been used to reduce grit of carbon black, but in the present invention, a grit trap system is additionally provided at a front end of the low grit system, thereby enabling production of carbon black powder in which grit is further reduced.

To this end, in the highly conductive carbon black powder and the manufacturing method thereof according to the embodiment of the present invention, a grit trap system is designed such that a pipe through which carbon black flows is vertically installed, and air is injected into an interior of the pipe to form a vortex, thereby increasing a residence time of the carbon black transferred into the pipe. Accordingly, relatively heavy grit impurities fall in a gravity direction as a residence time is increased by the vortex, whereby relatively large-sized grit is removed in advance before carbon black is introduced into a low grit system, thereby enabling a carbon black powder having an overall reduced grit to be manufactured.

As a result, the highly conductive carbon black powder manufactured by the method according to the embodiment of the present invention can have excellent processability and dispersibility together with excellent electrical conductivity, while remarkably reducing grit, which is a cause of surface protrusions.

Therefore, the highly conductive carbon black powder manufactured by the method according to the embodiment of the present invention is suitable for use in a high-voltage wire semiconductive masterbatch and an electro-static discharge (ESD) material.

### EXAMPLES

Hereinafter, the configuration and operation of the present invention will be described in more detail through preferred examples of the present invention. However, these are presented as preferred examples of the present invention and should not be construed as limiting the present invention in any sense.

Matters not described herein may be sufficiently technically inferred by those skilled in the art, and thus detailed descriptions thereof will be omitted.

### 1. Preparation of Carbon Black

Table 2 shows manufacturing processes and properties of carbon black powder according to Example 1 and Comparative Examples 1 and 2. In this case, carbon black powders according to Example 1 and Comparative Examples 1 and 2 were manufactured under process conditions described in Table 1. Comparative Example 1 was produced in a general reactor, and Comparative Example 2 was produced after changing a ratio through modification of a throat size of a reactor. In addition, Example 1 was produced by introducing a two-stage feedstock injection method in a state in which a ratio was changed through modification of a throat size of a reactor.

### (1) IA (Iodine Adsorption Number)

This is a method for analyzing a specific surface area of carbon black based on an iodine adsorption amount. It was measured in accordance with ASTM D1510. The higher the iodine adsorption amount, the smaller the particle size of carbon black becomes, and conversely, the lower the iodine adsorption amount, the larger the particle size becomes.

### (2) OAN (Oil Absorption number)

An OAN value is a value represented by evaluating an oil absorption amount of dibutyl phthalate (DBP) that can be contained in 100 g of carbon black, and was measured in accordance with ASTM D2414. A higher OAN value indicates that a structure of carbon black is more complex and more developed.

### (3) Tint

It was measured in accordance with ASTM-D3265. Tint is a value indicating a color of carbon black, and a higher Tint means that a particle size of carbon black is smaller and a structure thereof is simpler. Conversely, a lower Tint means that a particle size of carbon black is larger and a structure thereof is more complex.

### (4) Grit

It was measured in accordance with ASTM D1514. This is a value obtained by placing carbon black on 35, 100, and 325 mesh sieves, washing it with high-pressure water, and then measuring a weight of residues remaining on a sieve layer of each mesh without being washed away by the water. This analysis is based on a property that grit is not washed away by water.

**[Table 2]**

| Item | | Comparative Example 1 | Comparative Example 2 | Example 1 |
|---|---|---|---|---|
| Reactor | Throat size(diameter), mm | Φ230 | Φ350 | Φ350 |
| | Quenching zone size (diameter), mm | Φ900 | Φ900 | Φ900 |
| | B/C Ratio | 0.26 | 0.39 | 0.39 |
| | Air flow rate (Nm³/hr) | 5,310 | 6,020 | 6,020 |
| | Fuel flow rate (kg/hr) | 210 | 207 | 207 |
| Operating Conditions | Feedstock flow rate_1 (kg/hr) | 2,370 | 1,912 | 480 |
| | Feedstock flow rate_2 (kg/hr) | - | - | 1,432 |
| | Dryer temp. | 200°C | 200°C | 200°C |
| | Grit trap system | Not applied | Not applied | Applied |
| Carbon Black Powder | IA (g/kg) | 67 | 68 | 67 |
| | OAN (ml/100g) | 154 | 155 | 157 |
| | Tint (%) | 87 | 71 | 70 |
| | Grit (>500*µ*m, ea) | 2ea | 2ea | 0ea |
| | Grit (150~500*µ*m, ea) | 4ea | 5ea | 0ea |
| | Grit (50~150*µ*m, ea) | 25ea | 22ea | 4ea |

### 2. Evaluation of Carbon Black Properties

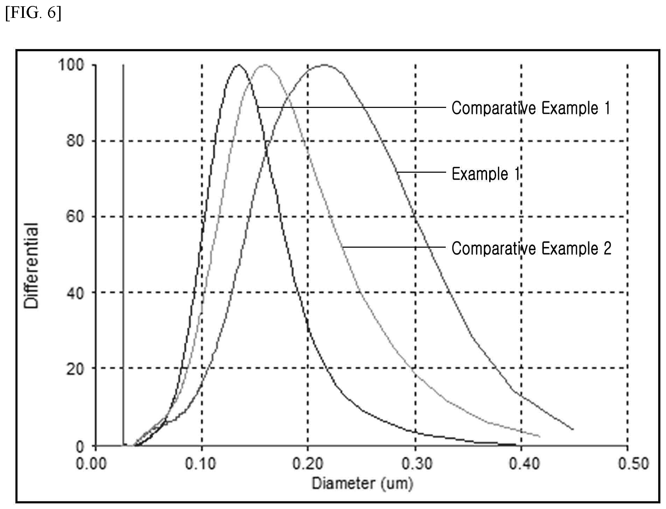

FIG. 6 is a graph showing results of an aggregate size distribution (ASD) analysis of carbon black powders manufactured according to Example 1 and Comparative Examples 1 and 2. Here, the ASD (aggregate size distribution) analysis method of carbon black is a method in which aggregates of carbon black are classified by size and a distribution thereof is expressed as a graph. The analysis was performed using a BI-DCP apparatus from Brookhaven by diluting carbon black in a solvent and then converting a time required for carbon black to settle downward through centrifugation into an aggregate size (AS). In this case, carbon black that settles quickly has a large aggregate size (AS), and carbon black that settles slowly has a small aggregate size (AS).

As shown in Table 2 and FIG. 6, it could be confirmed that, in the carbon black powder manufactured according to Example 1, an OAN value increased and a Tint value decreased compared to the carbon black powders manufactured according to Comparative Examples 1 and 2.

In particular, it could be confirmed that, in the carbon black powder manufactured according to Example 1, grit was significantly reduced compared to the carbon black powders manufactured according to Comparative Examples 1 and 2.

In addition, it could be confirmed that, in the carbon black powder manufactured according to Example 1, an aggregate size (AS) of carbon black was larger compared to the carbon black powders manufactured according to Comparative Examples 1 and 2.

### 3. Analysis of Carbon Black Compound

Table 3 shows analysis results of compounds manufactured by mixing carbon black powders manufactured according to Example 1 and Comparative Examples 1 and 2 with a binder resin. Here, the carbon black compounds were manufactured by mixing an ethylene vinyl acetate (EVA) resin (E-156W, Hanwha Total) with each of the carbon black powders manufactured according to Example 1 and Comparative Examples 1 and 2 such that a content of the carbon black powder was 30 wt%, followed by compounding at 90°C for 15 minutes using an internal mixer (HAAKE Rheocord 90).

### (1) Volume Resistance

Volume resistance was measured using MCP-T610 from Mitsubishi. A lower volume resistance indicates higher electrical conductivity. A compound was manufactured by mixing 30 wt% of the carbon black powder with 70 wt% of EVA resin, and then processed into a sheet having 100 mm (width) × 100 mm (length) × 2 mm (thickness) to measure volume resistance at room temperature.

### (2) Melt Index

A melt index refers to a value obtained by measuring an amount of carbon black compound discharged under the same temperature and pressure conditions, and a higher value indicates better processability. The melt index was measured using a Melt Flow Modular Line apparatus from CEAST. Specifically, a compound was manufactured by mixing 30 wt% of carbon black with 70 wt% of EVA resin, and then was pulverized and pelletized. The compound pellets were measured at 190°C for 10 minutes using a 21.6 kg weight.

### (3) Filter Pressure Value (FPV)

Filter pressure value (FPV) was measured in accordance with EN 13900-5. In a carbon black compound apparatus, EVA resin alone was extruded and a pressure applied to a filter die was measured and set as a reference pressure, and then a pressure value increasing while extruding the carbon black compound was measured according to Equation 2 below. In this case, a 25 µm filter was used. The value increases as the dispersibility, processability, and the grit content of carbon black increase.
Equation 2: $FPV = \left({P}_{max}-{P}_{s}\right) / m$
wherein Pₘₐₓ represents a maximum pressure after introduction of carbon black powder, Pₛ represents an average pressure after introduction of EVA resin, and m represents an amount of carbon black powder added.

**[Table 3]**

| Analysis Item | Comparative Example 1 | Comparative Example 2 | Example 1 |
|---|---|---|---|
| Volume resistance (Ω·cm) | 9.23 | 8.07 | 8.14 |
| Melt index (g/10min) | 82 | 89 | 94 |
| Filter pressure value (Bar/g) | 0.84 | 0.8 | 0.75 |

As shown in Table 3, as a result of analyzing the carbon black compounds, it could be confirmed that Example 1 exhibited a volume resistance lower than that of Comparative Example 1 and almost similar to that of Comparative Example 2, so that electrical conductivity was hardly deteriorated.

In particular, in the case of Example 1, it was confirmed that a melt index was significantly increased compared to Comparative Examples 1 and 2, and as a result, it could be seen that Example 1 exhibited superior processability compared to Comparative Examples 1 and 2.

In addition, in the case of Example 1, it was confirmed that a filter pressure value (FPV) was significantly lower than those of Comparative Examples 1 and 2, and as a result, it could be confirmed that Example 1 had a low grit content and thus exhibited excellent dispersibility and processability compared to Comparative Examples 1 and 2.

### 4. Dispersibility Analysis

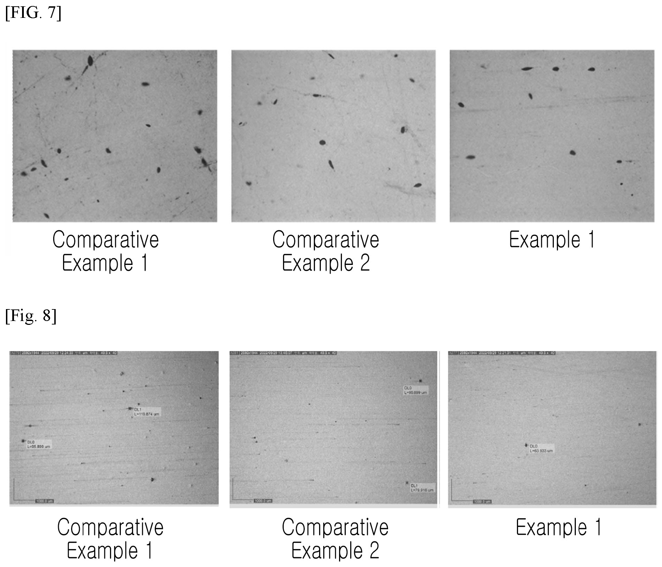

Table 4 is a table showing evaluation results of dispersibility of the carbon black compounds manufactured according to Example 1 and Comparative Examples 1 to 2, and FIG. 7 is an image observing cross-sections of the carbon black compounds manufactured according to Example 1 and Comparative Examples 1 and 2.

### (1) Analysis of Carbon Black Dispersibility

The carbon black compounds were manufactured by mixing an ethylene vinyl acetate (EVA) resin (E-156W, Hanwha Total) with each of the carbon black powders manufactured according to Example 1 and Comparative Examples 1 and 2 such that a content of the carbon black powder was 30 wt%, followed by compounding at 90°C for 15 minutes using an internal mixer (HAAKE Rheocord 90). Then, the compounds were processed into a sheet having 100 mm (width) × 100 mm (length) × 2 mm (thickness).

Thereafter, a cross-section of each sheet was cut, and images thereof were captured using a microscope. Then, undispersed carbon black (black spots) was counted by size, and a dispersibility score was determined as a rating of 0 to 9.5 based on Table 5. A higher value indicates a larger amount of undispersed carbon black, and thus a lower value indicates better dispersibility. The analysis was conducted in accordance with ISO 18553.

**[Table 4]**

| Analysis Item | Comparative Example 1 | Comparative Example 2 | Example 1 |
|---|---|---|---|
| Rating | 3 | 2.5 | 1.5 |

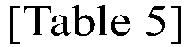

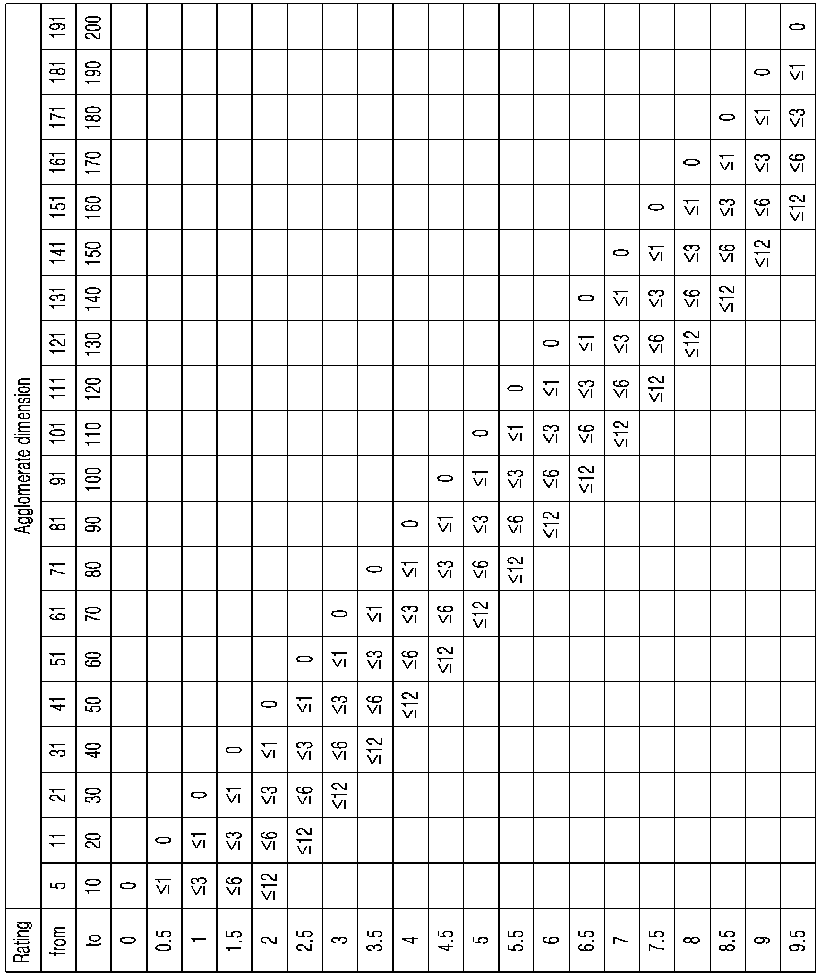

As shown in Table 4, Table 5, and FIG. 7, as a result of analyzing the dispersibility, it could be confirmed that the carbon black compound manufactured according to Example 1 had a lower rating than the carbon black compounds manufactured according to Comparative Examples 1 to 2. Therefore, it was confirmed that the carbon black compound manufactured according to Example 1 had improved dispersibility compared to the carbon black compounds manufactured according to Comparative Examples 1 to 2.

### 5. Analysis of Surface Protrusions

Table 6 is a table showing analysis results of surface protrusions of the carbon black compounds manufactured according to Example 1 and Comparative Examples 1 to 2, and FIG. 8 is an image observing surfaces of the carbon black compounds manufactured according to Example 1 and Comparative Examples 1 and 2.

### (1) Measurement of Surface Protrusions

The carbon black compounds were manufactured by mixing an ethylene vinyl acetate (EVA) resin (E-156W, Hanwha Total) with each of the carbon black powders manufactured according to Example 1 and Comparative Examples 1 and 2 such that a content of the carbon black powder was 30 wt%, followed by compounding at 90°C for 15 minutes using an internal mixer (HAAKE Rheocord 90). Then, a sheet having a thickness of 2 mm was extruded using a single extruder to measure a size and a number of protrusions on the surface. The size and number of surface protrusions (black spots in an image) were measured using internally developed software.

**[Table 6]**

| Analysis Item | Comparative Example 1 | Comparative Example 2 | Example 1 |
|---|---|---|---|
| Total surface protrusions, ea | 78,744 | 82,551 | 73,227 |
| Surface protrusions >50*µ*m, ea | 15 | 9 | 3 |

As shown in Table 6 and FIG. 8, as a result of analyzing the surface protrusions, it could be confirmed that in the case of the carbon black compound manufactured according to Example 1, both the number of total surface protrusions and the number of surface protrusions of 50 µm or more were reduced compared to the carbon black compounds manufactured according to Comparative Examples 1 and 2.

In particular, in the case of the carbon black compound manufactured according to Example 1, it could be confirmed that the number of surface protrusions of 50 µm or more, which are known to cause electrical treeing in wires, was significantly reduced.

Although the above description has focused on the embodiments of the present invention, various changes or modifications can be made by those skilled in the art to which the present invention belongs. Such changes and modifications can be said to be included in the present invention as long as they do not depart from the scope of the technical idea provided by the present invention. Accordingly, the scope of rights of the present invention should be determined by the claims described below.

### [Description of Reference Numerals]

S110: Carbon black preparing and filtering step
S120: Primary impurity removal step
S130: Secondary impurity removal step
S140: Pulverizing step
S150: Pelletizing and drying step

## Claims

1. A method for manufacturing a highly conductive carbon black powder, the method comprising:
(a) preparing carbon black in a reactor and then filtering the carbon black by passing the carbon black through a main bag filter;
(b) transferring the filtered carbon black to a grit trap system to primarily remove impurities of carbon black having a relatively large particle size;
(c) transferring the carbon black from which impurities have been primarily removed to a low grit system to secondarily remove impurities of carbon black having a relatively small particle size;
(d) transferring the carbon black from which impurities have been secondarily removed to a pulverizer to pulverize the carbon black; and
(e) pelletizing the pulverized product, followed by drying to obtain a highly conductive carbon black powder.

2. The method of claim 1, wherein in (a) above, the carbon black is prepared at a temperature of 1,300 to 1,800°C.

3. The method of claim 1, wherein in (a) above, the reactor comprises:
at least one supply part having an air supply part and a fuel supply part;
a reaction part into which a high-temperature combustion gas introduced through the supply part flows;
a throat extending from the reaction part and formed to have a diameter decreasing from the reaction part; and
a quenching part extending from the throat and having a larger diameter compared to the throat.

4. The method of claim 3, wherein the throat and the quenching part are designed to satisfy Equation 1 below: Equation 1: $0.36 \leq \left(diameter of throat/diameter of quenching part\right) \leq 0.44 .$

5. The method of claim 3, wherein the grit trap system is installed to communicate with the throat of the reactor.

6. The method of claim 5, wherein the grit trap system is designed such that a pipe through which the carbon black flows is vertically installed, and air is injected into an interior of the pipe to form a vortex, thereby increasing a residence time of the carbon black transferred into the pipe.

7. The method of claim 3, wherein feedstock is supplied by a two-stage feedstock injection method in which the feedstock is injected at two locations communicating with the throat of the reactor and having different positions in the throat of the reactor.

8. The method of claim 7, wherein in the two-stage feedstock injection method, the feedstock is primarily supplied at a rate of 300 to 600 kg/hour using a feedstock nozzle, and
is secondarily supplied at a rate of 1,000 to 2,000 kg/hour using a feedstock nozzle.

9. The method of claim 8, wherein during the primary supply using the feedstock nozzle, 20 to 25 wt% based on a total of 100 wt% is supplied, and
during the second supply using the feedstock nozzle, 75 to 80 wt% based on the total of 100 wt% is supplied.

10. The method of claim 6, wherein in the two-stage feedstock injection, the feedstock is simultaneously injected at two locations communicating with the throat of the reactor and having different positions in the throat of the reactor.

11. The method of claim 9 or claim 10, wherein in the grit trap system, grit having an average diameter exceeding 150 µm is removed.

12. The method of claim 1, wherein in (d) above, the pulverizing is performed using any one selected from a hammer mill, a high-speed mixer, a ball mill, and an air jet mill.

13. A highly conductive carbon black powder manufactured by the method according to any one of claim 1 to claim 12,
wherein the carbon black powder contains 10 ppm or less of grit having an average diameter of 50 to 150 µm.
